(19) **Europäisches Patentamt**
**European Patent Office**
**Office européen des brevets**

(11) **EP 1 845 488 A2**

(12) **EUROPÄISCHE PATENTANMELDUNG**

(43) Veröffentlichungstag:
**17.10.2007 Patentblatt 2007/42**

(51) Int Cl.:
***G06Q 30/00*** *(2006.01)*

(21) Anmeldenummer: **07004977.0**

(22) Anmeldetag: **14.03.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **12.04.2006 DE 102006018082**

(71) Anmelder: **Minol Messtechnik W. Lehmann GmbH & Co. KG
70771 Leinfelden-Echterdingen (DE)**

(72) Erfinder: **Haupt, Christian
82239 Alling (DE)**

(74) Vertreter: **Dreiss, Fuhlendorf, Steimle & Becker Patentanwälte
Postfach 10 37 62
70032 Stuttgart (DE)**

(54) **Rechnergestütztes Verfahren zum Auswerten von Verbrauchsdaten sowie System zur Durchführung des Verfahrens**

(57) Die Erfindung betrifft ein rechnergestütztes Verfahren zum Erfassen und Auswerten von Verbrauchsdaten in Form von Wärme-, Strom-, Gas- und/oder Wasserverbrauchsdaten bei der Bewirtschaftung von Liegenschaften, wobei, mittels Verbrauchssensoren an jeweiligen Messstellen der Liegenschaft Temperaturen und/ oder Durchflussmengen und oder elektrische Ströme gemessen und hieraus Verbrauchsdaten gebildet werden, wobei die Verbrauchsdaten quasikontinuierlich, insbesondere täglich oder noch öfter, ermittelt werden und unmittelbar an eine zentrale Auswertestelle gesandt oder zwischengespeichert und in vorbestimmten oder vorbestimmbaren Zeitintervallen an die zentrale Auswertestelle gesandt werden, bei dem die quasikontinuierlich gemessenen Temperaturwerte und/oder Durchflussmengen und die ermittelten Verbrauchsdaten der Datennahme folgend fortlaufend akkumuliert werden, so dass zu jeder Datennahme ein akkumulierter Verbrauchswert vorliegt, und dass sämtliche Verbrauchsdaten oder jeder akkumulierte Verbrauchswert während eines vorbestimmten Zeitraums, insbesondere während einer Bewirtschaftungsperiode, gespeichert wird, und dass zu einem beliebigen Zeitpunkt während eines vorbestimmten Zeitraums der akkumulierte Verbrauchswert zu diesem Zeitpunkt mit demjenigen eines vorangegangenen Zeitraums, insbesondere der vorangegangenen Bewirtschaftungsperiode, verglichen wird

Fig.1

EP 1 845 488 A2

**Beschreibung**

Die Erfindung betrifft ein rechnergestütztes Verfahren zum Erfassen und Auswerten von Verbrauchsdaten, in Form von Wärme-, Strom-, Gas- und/oder Wasserverbrauchsdaten bei der Bewirtschaftung von Liegenschaften, wobei mittels Verbrauchssensoren an jeweiligen Messstellen der Liegenschaft Temperaturen und/oder Durchflussmengen und oder elektrische Ströme gemessen und hieraus Verbrauchsdaten gebildet werden, wobei die Verbrauchsdaten quasikontinuierlich, insbesondere täglich oder noch öfter, ermittelt werden und unmittelbar an eine zentrale Auswertestelle gesandt oder zwischengespeichert und in vorbestimmten oder vorbestimmbaren Zeitintervallen an die zentrale Auswertestelle gesandt werden.

Ferner betrifft die Erfindung ein Verbrauchsdatenerfassungs- und -auswertungssystem zur Durchführung des rechnergestützten Verfahrens.

Wenn vorliegend von der Bewirtschaftung von Liegenschaften die Rede ist, so ist hiermit die Messung von physikalischen Größen, nämlich Temperaturen, Durchflussmengen und elektrischen Strömen zur Erfassung des tatsächlichen Verbrauchs und die Ermittlung von hieraus abgeleiteten Verbrauchskosten, die auf die einzelnen Nutzeinheiten eines an sich beliebigen Gebäudes umgelegt werden, gemeint. Bei dem Gebäude kann es sich z. B. um ein eine einzige Nutzeinheit oder eine Vielzahl von Nutzeinheiten, z. B. Mietwohnungen, umfassendes Gebäude, einen Büro- oder Industriekomplex handeln, bei dem eine solche Bewirtschaftung durchgeführt wird.

Bei einem gattungsgemäßen Verfahren gemäß EP 0 924 949 A1 werden beispielsweise Verbrauchsdaten des laufenden Wirtschaftsjahrs monatsweise verglichen mit Verbrauchsdaten des entsprechenden Monats des vorausgegangenen Wirtschaftsjahrs. Die Monatsdaten des vorausgegangenen Wirtschaftsjahrs bilden einen vorherbestimmten Erwartungswert, der überschritten oder unterschritten werden kann. Ein Benutzer erhält Zugriff auf den aktuellen Stand der monatsweise zusammengestellten Verbrauchswerte und auf die sich aus den Verbrauchswerten des vorangegangenen Jahres ergebenden Erwartungswerte.

Diese Art des Energiemanagements erweist sich jedoch als unzulänglich und wenig aussagekräftig, da sich witterungsbedingt der Energieverbrauch stark ändern kann, ohne dass sich das Nutzerverhalten verändert haben muss. Rückschlüsse können kaum gezogen werden.

Der vorliegenden Erfindung liegt die Aufgabe zugrunde, das eingangs genannte Verfahren brauchbarer zu machen.

Diese Aufgabe wird durch ein rechnergestütztes Verfahren mit den Merkmalen des Anspruchs 1 und durch ein System mit den Merkmalen des Anspruchs 12 gelöst.

Es wird erfindungsgemäß vorgeschlagen, dass die quasikontinuierlich, insbesondere im Abstand von nur wenigen Tagen und vorzugsweise täglich, mittels Verbrauchssensoren an den jeweiligen Messstellen der Liegenschaft ermittelten Verbrauchsdaten fortlaufend akkumuliert werden, so dass zu jedem Zeitpunkt ein aufaddierter Summenwert der Verbrauchsdaten vorliegt. Die Auswertung oder Bewertung erfolgt unter Verwendung des jeweiligen akkumulierten Verbrauchswerts. Es kann also zu jedem inkrementellen Zeitpunkt, also bei jeder Datennahme, vorzugsweise täglich, ein neuer akkumulierter Verbrauchswert ermittelt und weiterverarbeitet werden. Erfindungsgemäß stehen außerdem in einem Datenspeicher der jeweilige akkumulierte Verbrauchswert für die entsprechenden Zeitpunkte aus einem vorangegangenen (Bewirtschaftungs-) Zeitraum zur Verfügung. Diese gespeicherten akkumulierten Verbrauchswerte werden dem Datenspeicher entnommen und für den Vergleich herangezogen. Es kann dann zu jedem Zeitpunkt, insbesondere täglich, ein akkumulierter Verbrauchswert mit dem entsprechenden akkumulierten Verbrauchswert des vorangegangenen Zeitraums bzw. der vorangegangenen Bewirtschaftungsperiode verglichen werden. Somit liegt zu jedem Zeitpunkt durch Berücksichtigung von nur jeweils zwei Werten ein aussagekräftiger Vergleich zwischen der laufenden Bewirtschaftungsperiode und der vorangegangenen Bewirtschaftungsperiode vor. Infolge des Akkumulierens, also des laufenden Aufsummierens der Verbrauchsdaten, wird ein von witterungsbedingten Schwankungen zunehmend unabhängiger Verbrauchswert ermittelt, der für eine Bewertung zuverlässig mit dem entsprechenden akkumulierten Verbrauchswert der vorangegangenen Bewirtschaftungsperiode verglichen werden kann. Wenn vorausgehend von einer quasikontinuierlichen Datennahme die Rede ist, so bedeutet dies, dass die Datennahme häufiger als einmal pro Woche, vorzugsweise alle zwei Tage und am besten täglich durchgeführt wird. Für einzelne Anwendungen ist auch eine noch häufigere Datennahme denkbar.

Nach einer bevorzugten Ausführungsform des erfindungsgemäßen Verfahrens erfolgt der Vergleich der akkumulierten Verbrauchswerte dadurch, dass rechnergestützt geprüft wird, ob der akkumulierte Verbrauchswert zu einem Zeitpunkt innerhalb einer Bandbreite des akkumulierten Verbrauchswerts zum entsprechenden Zeitpunkt eines vorangegangenen Zeitraums liegt. Bei der zugrundegelegten Bandbreite kann es sich in vorteilhafter Weise um eine prozentuale Bandbreite von insbesondere $\pm$ 10% des betreffenden akkumulierten Verbrauchswerts des vorangegangenen Zeitraums handeln. Auf Basis der akkumulierten Verbrauchswerte für beispielsweise Heizung (Wärmeverbrauchsdaten) und Warm- und Kaltwasser kann dann zusätzlich eine Verbrauchstendenz ermittelt werden. Auf Basis der entsprechenden akkumulierten Verbrauchswerte des vorangegangenen Zeitraums kann geprüft werden, ob die Tendenz fallend, steigend oder gleichbleibend ist. Dies kann in an sich beliebiger Weise durch den Dienstleister rechnergestützt in der Auswertestelle ermittelt und angezeigt werden. Die entsprechende Information kann einem Nutzer unter Inanspruchnahme an sich beliebiger Kommunikationsmedien, wie schriftlich per Post, per Fax, oder über drahtgebundene oder drahtlose Kommunikationsmedien zur Verfügung gestellt werden.

Nach einer ganz besonders bevorzugten weiteren Ausbildung des erfindungsgemäßen Verfahrens und des erfindungsgemäßen Systems werden unterschiedliche Witterungsverhältnisse in den betrachteten Zeiträumen oder Bewirtschaftungsperioden berücksichtigt. Aufgrund unterschiedlicher Witterungsverhältnisse kann nämlich trotz gleichbleibenden Nutzungsverhaltens die Höhe des Verbrauchs variieren. Es wird in weiterer Ausbildung der Erfindung vorgeschlagen, dass rechnerunterstützt die Außentemperatur zu jeder quasikontinuierlichen Ermittlung der Verbrauchsdaten zyklisch erfasst wird und hieraus ein Temperaturwert gebildet wird, der zu der betreffenden Verbrauchsdatennahme gespeichert wird. Es wird also zu jeder quasikontinuierlichen, insbesondere täglichen, Verbrauchsdatennahme ein Wert der Außentemperatur gespeichert. Dieser Außentemperaturwert kann auch innerhalb eines Tages zyklisch erfasst werden, insbesondere nach der folgenden Formel

$$t_{a,m} = \frac{t_{a,7Uhr} + t_{a,14Uhr} + 2 \cdot t_{a,21Uhr}}{4}$$

Diese mittlere Außentemperatur $t_{a,m}$ wird dann zu dem betreffenden Verbrauchsdatum bzw. zu dem akkumulierten Verbrauchswert an dem betreffenden Tag gespeichert.

Die für einen Abrechnungszeitraum sich ergebenden Witterungsverhältnisse werden durch Ermittlung einer sogenannten Gradtagzahl erfasst und gespeichert. Die Gradtagzahl wird vorzugsweise nach folgender Formel

$$G_{T^0} = \sum_{n=1}^{z} (T^0 - t_{a,z})$$

errechnet, wobei der Wert für die Temperatur $T^0$ eine Heizgrenze von beispielsweise 15°C bezeichnet. Die Summation läuft über die Anzahl der Datennamen. Werden beispielsweise täglich Verbrauchsdaten mittels der Verbrauchssensoren ermittelt und hieraus täglich ein akkumulierter Verbrauchswert berechnet, so wird summiert bis z = 365, wenn ein Zeitraum von z. B. 1. Januar bis 31. Dezember als Bewirtschaftungszeitraum berücksichtigt wird. Die Gradtagzahl für das laufende Jahr ändert sich somit täglich. Ebenso wird in vorteilhafterweise rechnergestützt der jeweilige aktuelle akkumulierte Verbrauchswert mittels der aktuellen Gradtagzahl und der entsprechenden Gradtagzahl aus einem vorangehenden Zeitraum wie folgt berichtigt:

$$Q_{aktuell,korr.} = Q_{aktuell} \cdot \frac{G_{T^0,Vorjahr,t\_aktuell}}{G_{T^0,aktuell,t\_aktuell}}$$

Mit diesem korrigierten, aktuellen akkumulierten Verbrauchswert $Q_{aktuell,korr.}$ kann dann der Vergleich mit dem Vorjahr ausgeführt und ausgewertet werden.

Da naturgemäß die Außentemperatur und die Witterungsverhältnisse einen direkten Einfluss auf den Wärmeverbrauch bei der Bewirtschaftung von Liegenschaften haben und einen geringeren Einfluss beispielsweise auf den Wasserverbrauch, handelt es sich bei den vorstehenden akkumulierten Verbrauchswerten um Wärmeverbrauchswerte Q.

Nach einer weiteren Ausführungsform der Erfindung wird rechnerunterstützt eine Verbrauchstendenz für eine Nutzeinheit einer Liegenschaft bestimmt, indem aus akkumulierten Verbrauchswerten der jeweiligen Nutzeinheit und aus in einem Speicher der zentralen Auswertestelle hinterlegten Daten zu den Flächen der einzelnen Nutzeinheiten einer Liegenschaft ein flächenspezifischer Verbrauch für die Nutzeinheit und für die gesamte Liegenschaft ermittelt wird, die miteinander verglichen werden.

$$F_{W\ddot{a}rme,i} = \frac{\dfrac{Q_{NE,i}}{A_{NE,i}}}{\dfrac{\sum\limits_{1}^{n} Q_{NE,n}}{\sum\limits_{1}^{n} A_{NE,n}}}$$

Dabei bedeuten:

$Q_{NE,i}$ = der aktuelle, kumulierte Wärmeverbrauch der Nutzeinheit,
$A_{NE,i}$ = die beheizte Fläche der Nutzeinheit,
$\Sigma Q_{NE,n}$ = der aktuelle, kumulierte Wärmeverbrauch der Liegenschaft,
$\Sigma A_{NE,n}$ = die beheizte Fläche der Liegenschaft.

Für die Angabe von Tendenzen werden nachfolgende Intervalle gewählt:

| Größenverhältnis | $0 \leq F_{W\ddot{a}rme,\,i} \leq 0{,}83$ | $0{,}83 < F_{W\ddot{a}rme,\,i} < 1{,}2$ | $1{,}2 < F_{W\ddot{a}rme,\,i}$ |
|---|---|---|---|
| **Tendenz** | unterdurchschnittlich | durchschnittlich | überdurchschnittlich |
| Intervalle der Verbrauchstendenz für Wärme bezogen auf den Durchschnitt der Liegenschaft | | | |

In vorteilhafter Weise werden die Wärmeverbräuche innerhalb einer Liegenschaft miteinander verglichen, indem eine einheitliche Bezugsgröße, nämlich die beheizte Fläche, berücksichtigt wird. Damit ist für eine jeweilige Nutzeinheit der Liegenschaft, beispielsweise eine betrachtete vermietete Wohnung, der flächenspezifische Wärmeverbrauch zu einem jeden aktuellen Zeitpunkt, insbesondere täglich, ermittelbar. Für die nutzerspezifischen Vergleichswerte im Vergleich zum gesamten flächenspezifischen Wärmeverbrauch der Liegenschaft gilt die vorstehende Formel. Es kann dann in vorteilhafter Weise geprüft werden, ob das Verhältnis des flächenspezifischen Verbrauchs der Nutzeinheit und des flächenspezifischen Verbrauchs der gesamten Liegenschaft innerhalb von vorbestimmten Intervallen liegen. Dies kann dann in an sich beliebiger Weise angezeigt und einem Nutzer mitgeteilt werden.

Bei anderen Verbrauchsdaten, wie z. B. Wasser, kann es sich als vorteilhaft erweisen, wenn ein personenzahlspezifischer Verbrauch ermittelt wird, da der Wasserverbrauch üblicherweise personenabhängig ist, also von der Anzahl der ständigen Bewohner einer Nutzeinheit abhängig ist und nicht unbedingt mit dem durchschnittlichen Verhältnis der Liegenschaft korreliert. Es erweist sich hier als vorteilhaft, wenn rechnergestützt eine Verbrauchstendenz für eine Nutzeinheit einer Liegenschaft bestimmt wird, indem aus akkumulierten Verbrauchswerten der jeweiligen Nutzeinheit und aus in einem Speicher der zentralen Auswertestelle hinterlegten Daten zu der den einzelnen Nutzeinheiten einer Liegenschaft zugeordneten Personenzahl ein personenzahlspezifischer Verbrauch für die Nutzeinheit und für die gesamte Liegenschaft ermittelt wird, die miteinander verglichen werden.

$$F_{Wasser,i} = \frac{\dfrac{V_{NE,i}}{P_{NE,i}}}{\dfrac{\sum\limits_{1}^{n} V_{NE,n}}{\sum\limits_{1}^{n} P_{NE,n}}}$$

Dabei bedeuten:

$V_{NE,i}$ = der aktuelle, kumulierte Wasserverbrauch der Nutzeinheit,

$P_{NE,i}$ = Anzahl der Personen in der Nutzeinheit,
$\Sigma V_{NE,i}$ = der aktuelle, kumulierte Wasserverbrauch der Liegenschaft,
$\Sigma P_{NE,i}$ = Anzahl der Personen in der Liegenschaft.

Für den Wasserverbrauch können beispielsweise die gleichen Tendenzintervalle gelten wie für die Wärme.

Bislang wurden in einem Speicher der zentralen Auswertestelle hinterlegte Verbrauchsdaten und akkumulierte Verbrauchswerte berücksichtigt. Hieraus kann eine Verbrauchstendenz abgeleitet werden. Nach einem weiteren Erfindungsgedanken kann auch die Kostentendenz einer Liegenschaft oder einer Nutzeinheit einer Liegenschaft auf Basis der Vorjahreskosten angegeben werden.

Da der Nutzer alleine anhand der Verbrauchstendenz nur im Falle eines gleich bleibenden Verhaltens seine zu erwartenden Kosten abschätzen kann, erweist es sich als vorteilhaft, wenn zusätzlich eine Kostentendenz angegeben wird.

Die Kostentendenz bezieht sich im allgemeinen auf die Gesamtkosten. In Sonderfällen kann es sich aber als vorteilhaft erweisen, wenn eine Kostentendenz nur für den verbrauchsabhängigen Anteil ermittelt wird, da der Grundkostenanteil je Nutzeinheit prozentual gleich bleibt.

Da gerade in der ersten Hälfte des Abrechnungszeitraumes auf Basis des Verbrauchsverhaltens eine verlässliche Abschätzung der Kosten schwierig sein kann und eine Prognose fehlerbehaftet sein kann, wird vorgeschlagen, die Kostentendenz anhand eines momentanen relativen Verbrauchsanteils $f_{rel,Wärme}$ zu ermitteln (nachfolgend am Beispiel von Wärmeverbrauch (Heizung)). Der Index i bezeichnet die betrachtete Nutzeinheit von insgesamt n Nutzeinheiten einer Liegenschaft.

$$f_{rel,Wärme,i,aktuell} = \frac{Q_{NE,i}}{\sum_{1}^{n} Q_{NE,n}}$$

Sinnbildlich gesprochen bedeutet dies: was ergeben sich mit den aktuell ermittelten Verbrauchsanteilen für Kostenverteilungen, wenn heute Stichtag wäre. Die Kosten werden dabei für den kompletten Abrechnungszeitraum angegeben.

Für die Kostendifferenz Wärme (im Vergleich zum Vorjahr) ergibt sich mit den Verbrauchskosten Heizung des Vorjahres $K_{Hzg\_ges,\,Vorj.}$ folgende Gleichung:

$$K\_diff_{Wärme,i} = (f_{rel,Wärme,i,aktuell} - f_{rel,Wärme,i,Vorj.}) \cdot K_{Hzg\_ges,Vorj.}$$

Sowie für die relativen Kostentendenz:

$$T\_rel_{Wärme,i} = \frac{(f_{rel,Wärme,i,aktuell} - f_{rel,Wärme,i,Vorj.})}{f_{rel,Wärme,i,Vorj.}}$$

Um Erfahrung zu sammeln in wie weit sich die relativen Verbrauchsanteile im Betrachtungszeitraum ändern, sollen die Kostendifferenz und die relative Kostentendenz einmal mit dem Endwert des Vorjahres des relativen Verbrauchsanteils und einmal mit dem entsprechenden Wert des Vorjahres zum gleichen Zeitpunkt berechnet und jeweils aufgezeichnet werden.

Für die Anzeigen der Kostentendenzen werden nachfolgende Intervalle gewählt:

| Größenverhältnis | $T\_rel_{Wärme,\,i} \leq -0{,}2$ | $-0{,}2 < T\_rel_{Wärme,\,i} < 0{,}2$ | $0,2 < T\_rel_{Wärme,i}$ |
|---|---|---|---|
| **Tendenz** | unterdurchschnittlich | durchschnittlich | überdurchschnittlich |
| Intervalle der Kostentendenz für Wärme bezogen auf die Kosten des Vorjahres | | | |

Für die Anzeige der Kostendifferenz kann in vorteilhafter Weise die Darstellung in Intervallen in Abhängigkeit der Vorjahreskosten erfolgen. Dies ist vorteilhaft, da beispielsweise eine Kostenerhöhung von 100 € bei Vorjahreskosten von 300 € den Nutzer anders "beeindrucken", als wenn die Vorjahreskosten 1600 € betragen haben.

Dazu werden die Intervalleinteilungen gemäß vorstehender Tabelle verwendet. Im "durchschnittlichen" Bereich kann die Kostendifferenz auf 10 € gerundet direkt angegeben werden. Im unter- und überdurchschnittlichen Bereich wird die Kostendifferenz nur in Form "größer" oder "geringer" als die auf 10 € gerundete Kostendifferenz mit den Intervallgrenzen der durchschnittlichen Tendenz angezeigt. Beispiel:

| Gesamtkosten | $f_{rel, Wärme, i, Vorj.}$ | $f_{rel, Wärme, i, aktuell}$ | | |
|---|---|---|---|---|
| 10000 € | 3,5 % | 3,7% | 4,4% | 2,7% |
| | $K\_diff_{Wärme,i}$ | 20,00 € | 90,00 E | -80,00 € |
| | $T\_rel_{Wärme, i}$ | 5,7% | 25,7% | -22,9% |
| | Grenzkosten bei +20% | 70,00 € | 70,00 € | 70,00 € |
| | Grenzkosten bei -20% | -70,00 € | -70,00 € | -70,00 € |
| | Anzeige | 20 € | > 70 € | > - 70 € |

Die "Grenz"-Kostendifferenz berechnet sich allgemein zu:

$$K\_diff_{Wärme,Grenz,i} = T\_rel_{Wärme,Grenz} \cdot f_{rel,Wärme,i,Vorjahr} \cdot K_{Hzg\_ges,Vorj.}$$

wobei $T\_rel_{Wärme, Grenz}$ dann einen beliebig vorgebbaren Prozentsatz (z. B. $\pm$ 20%) bezeichnet.

Für die Kostentendenz beim Wasserverbrauch gelten die für Wärme dargestellten Beziehungen analog.

Kostentendenz einer Nutzeinheit auf Basis einer angenommenen Kostenentwicklung für das laufende Jahr:

Da die Kosten für die Versorgung von Gebäuden im allgemeinen von Jahr zu Jahr variieren, wird die Angabe der Kostentendenz auf der Basis der Vorjahreskosten in vielen Fällen vom tatsächlich erreichten Wert abweichen. Aus diesem Grund kann es sich als vorteilhaft erweisen, wenn über einen jederzeit anpassbaren Faktor eine Kostenänderung für das laufende Jahr im Vergleich zum Vorjahr berücksichtigt werden kann.

Die geschätzten Verbrauchskosten für Heizung des aktuellen Jahres $K_{Hzg\_ges, aktuell}$ berechnet sich aus:

$$K_{Hzg\_ges,aktuell} = P_{aktuell-Vorj.} \cdot K_{Hzg\_ges,Vorj.}$$

Der Faktor $P_{aktuell-Vorj.}$ berücksichtigt die prozentuale Kostenänderung im Vergleich zum Vorjahr. Die weiteren Berechnung verlaufen analog wie vorausgehend dargestellt, wobei statt der Verbrauchskosten des Vorjahres die geschätzten Verbrauchskosten des aktuellen Jahres zu verwenden sind.

Darstellung von Nutzeinheiten und/oder Räumen mit extremen Verbräuchen:

Bei Einsatz von Wärmezählern für die Erfassung des Wärmeverbrauchs kann die Betrachtung nur auf die gesamte Nutzeinheit erfolgen. Bei der Verwendung von Heizkostenverteilern als Verbrauchssensoren kann dann auch eine raumweise Darstellung stattfinden.

Werden die oben dargestellten Verbrauchstendenzen angewandt, so können extreme Abweichungen als ein Indiz für ein Problem angesehen werden.

Ist beispielsweise der Verbrauch einer Nutzeinheit um das 3-fache im Vergleich zum Liegenschaftsdurchschnitt höher, so sollte eine Ursachenforschung begonnen werden, da die Wahrscheinlichkeit einer Reklamation bezüglich der Abrechnung als hoch angesehen werden muss. Hinsichtlich der Ursachen ist zu unterscheiden, ob diese nutzungsbedingt oder technischer Natur sind. Nutzungsbedingte Ursachen sind erklärbar und in einem gewissen Rahmen auch abzustellen. Sind die Ursachen aber technisch bedingt, kann dies zu einem Problem führen, wenn der Anlagenbetreiber und nicht der Nutzer dafür verantwortlich ist.

Es könnten in vorteilhafter Weise und ferner rein beispielhaft folgende Ereignisse festgehalten und gemeldet werden:

- der spezifische Verbrauch bezogen auf den Durchschnitt der Liegenschaft ist beispielsweise größer als 250%,
- der spezifische Verbrauch bezogen auf den Durchschnitt der Liegenschaft ist (beispielsweise) kleiner als 20%,
- "Nullwerte" bzw. geringe Verbräuche über den gesamten Betrachtungszeitraum,
- die relative Kostentendenz ist (beispielsweise) größer als 0,5 oder kleiner -0,5,
- keine Korrelation zwischen Verbrauch Wasser und Heizung; ist der spezifische Verbrauch bezogen auf den Durchschnitt der Liegenschaft einer Nutzeinheit für Heizung im umgekehrten Verhältnis zum Verbrauch Wasser sollte eine Ursachenforschung betrieben werden (beispielsweise duschen im Vereinsheim).

**Diagnose von Gerätefehlern:**

Fehlermeldungen von Geräten können entweder direkt übermittelt werden (z.B. über M-Bus-Protokoll), wenn Fehler von einem Gerät (z.B. Wärmezähler) gemeldet werden, oder sie können mittels Diagnose aus unplausiblen Werten abgeleitet werden. Unplausible Werte müssen nicht unbedingt mit einem Gerätedefekt zusammenhängen, sondern können auch anlagen- bzw. betriebsbedingt sein (z.B. Überdimensionierung eines Zählers).

Prinzipiell sind folgende Werte als zunächst unplausibel anzunehmen und die Ursachen zu klären:

- "Nullwerte" bzw. geringe Verbräuche über den gesamten Betrachtungszeitraum,
- der spezifische Verbrauch bezogen auf den Durchschnitt der Liegenschaft ist kleiner als 10%,
- der kumulierte Verbrauch darf keine negative Steigung aufweisen.

Darstellung von über- oder unterdurchschnittlichen Abweichungen in einer Gesamtübersicht:

Es wird auch vorgeschlagen, das Gebäude schematisch mit der Lage der einzelnen Nutzeinheit darzustellen und die einzelnen Kennwerte der Tendenzen visuell unterscheidbar zu gestalten.

In Figur ist ein Vorschlag am Beispiel des Wärmeverbrauchs dargestellt. Im Beispiel sind Nutzeinheiten hellgrün (für leicht unterdurchschnittlich), gelb (für durchschnittlich) oder rot (für überdurchschnittlich) unterlegt. Folgende Zuordnung könnte eine einfache Darstellung zulassen:

| Farbe | grün | gelbgrün | Gelb | orange | rot |
|---|---|---|---|---|---|
| **Kategorie** | unterdurchschnittlich | leicht unterdurchschnittlich | Durchschnittlich | leicht überdurchschnittlich | überdurchschnittlich |
| **Zuordnung** | Alle Kennwerte "grün" | Kennwerte "grün" und "gelb" | alle Kennwerte "gelb" | Kennwerte "gelb" und <u>einer</u> "rot" | mehr als ein Kennwert "rot" |
| Kategorisierung der Nutzeinheiten | | | | | |

Es könnten pro Nutzeinheit die Tendenzen und aktuellen Werte der Kenndaten aufgeführt werden.

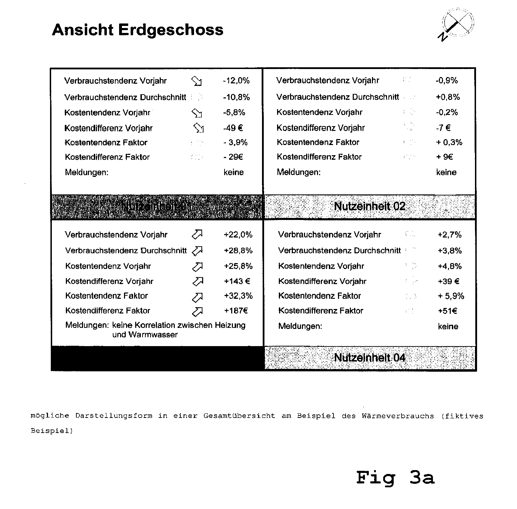

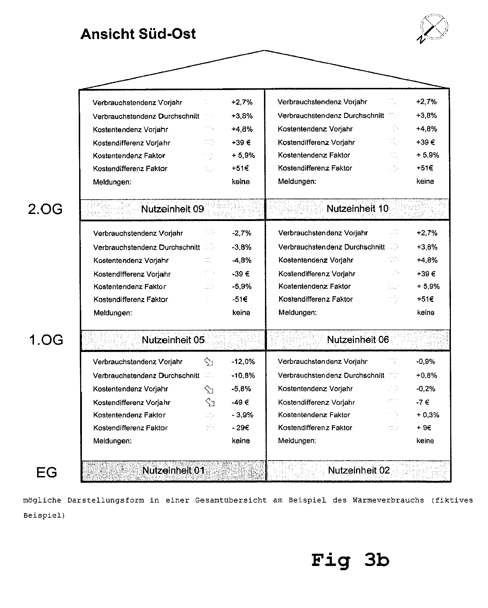

Mittels eines an sich beliebigen rechnergesteuerten Anzeigemittels könnten unterschiedliche Kategorien der Auswertung in visuell unterschiedlich wahrnehmbarer Weise angezeigt werden. Beispielsweise könnten durch den Rechner gesteuert nach einer vorgegebenen programmierten Regel unterschiedlich kontrastierte oder unterschiedlich farbige oder unterschiedlich gestaltete graphische Elemente zur Anzeige gebracht werden, und zwar in Abhängigkeit von programmierten Abfragen bei der Auswertung der Verbrauchsdaten, die dann unterschiedlichen Ergebnissen/Kategorien der Auswertung zuordenbar sind. Dies ist in der Figur 3 beispielhaft angedeutet. Der linke Teil der Figur zeigt einen Horizontalschnitt durch ein Gebäude und der rechte Teil eine Seitenansicht unter Kenntlichmachung verschiedener Nutzeinheiten auf einem Anzeigemittel. Neben Einzelinformationen der Auswertung werden in einem beispielhaft horizontalen Feld verschiedene visuell wahrnehmbare Eindrücke vermittelt, die mit dem jeweiligen Verbrauch und mit der Auswertung für die betreffende Nutzeinheit korrelieren.

Gegenstand der vorliegenden Erfindung ist des Weiteren ein rechnergestütztes Verbrauchsdatenerfassungs- und -auswertungssystem mit den Merkmalen der Ansprüche 12 oder 13. Dabei befinden sich die Verbrauchssensoren an den jeweiligen Messstellen, und ein erster Rechner ist in oder bei der Liegenschaft vorgesehen und steuert die Erfassung und Zwischenspeicherung und gegebenenfalls die Weiterleitung von Verbrauchsdaten an einen zentralen zweiten Rechner an einer zentralen Auswertestelle, sofern die Auswertung an von der Liegenschaft verschiedener zentraler Stelle ausgeführt wird. Wenn beispielsweise die Hausverwaltung in einem größeren Gebäudekomplex ansässig ist, so wäre es denkbar, dass die Ausführung des erfindungsgemäßen Verfahrens gewissermaßen vor Ort in der Liegenschaft erfolgt. Hierfür wäre dann der erste Rechner hinreichend. Erfolgt die Ausführung des erfindungsgemäßen Verfahrens anderswo, so werden die Daten von dem ersten Rechner an einen zweiten Rechner gesandt. Hierfür kann ein an sich beliebiges Informationsvermittlungssystem, drahtlos oder drahtgebunden, einschließlich eines Telekommunikationsnetzes, verwendet werden. Der erste und/oder der zweite Rechner sind zur Bildung der jeweiligen akkumulierten Verbrauchswerte ausgebildet. Ferner ist ein erstes und/oder ein zweites Speichermittel den beiden Rechnern zugeordnet, wo die quasikontinuierlich erfassten Verbrauchsdaten und/oder alle akkumulierten Verbrauchswerte rechnergestützt abspeicherbar sind, so dass ein späterer Zugriff hierauf jederzeit möglich ist.

In Weiterbildung der Erfindung von besonderer Bedeutung umfasst das System einen Temperatursensor, mittels dessen die Außentemperatur zu jeder quasikontinuierlichen Ermittlung der Verbrauchsdaten rechnergesteuert erfasst wird. Der erste Rechner ist zur Speicherung des zu der betreffenden Verbrauchsdatennahme gehörenden Außentemperaturwerts und/oder zur Weitersendung des Außentemperaturwerts an den zweiten Rechner zusammen mit den Verbrauchsdaten ausgebildet.

In vorteilhafter Weise ist ein dem ersten Rechner oder dem zweiten Rechner zugeordnetes Anzeigemittel vorgesehen, welches gesteuert durch den ersten oder zweiten Rechner ein Ergebnis der Auswertung der Verbrauchsdaten anzeigt. Dieses Anzeigemittel kann beispielsweise ein Monitor unmittelbar bei dem ersten oder zweiten Rechner sein, oder es befindet sich bei einem hiervon externen Benutzer, der über beliebige Kommunikationsverbindungen auf den ersten oder zweiten Rechner zugreift. Als Ergebnis der Auswertung kann z.B. die zu erwartende Veränderung der Kosten gegenüber den Kosten des Vorjahrs oder die zu erwartenden (Gesamt-)Kosten oder der zu erwartende Betrag einer Nachzahlung bzw. einer Rückerstattung (Gesamtkosten abzüglich Vorauszahlungen) angezeigt werden.

Weitere Merkmale des Verbrauchsdatenerfassungs- und - auswer-tungssystems zur Durchführung des erfindungsgemäßen Verfahrens ergeben sich aus den weiteren Unteransprüchen.

Weitere Merkmale, Einzelheiten und Vorteile der Erfindung ergeben sich aus den beigefügten Patentansprüchen und der Zeichnerischen Darstellung. In der Zeichnung zeigt.

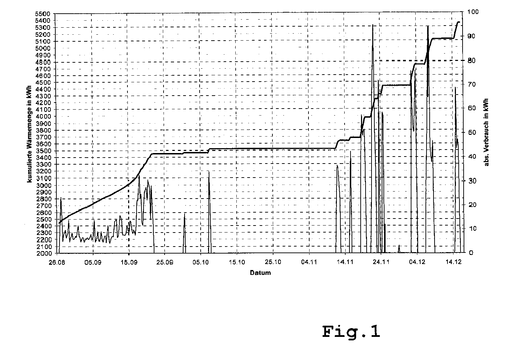

Figur 1            eine beispielhafte Darstellung einer Verbrauchsdatennahme über mehrere Monate nebst Darstellung eines akkumulierten Verbrauchswerts am Beispiel von Wärmemenge;

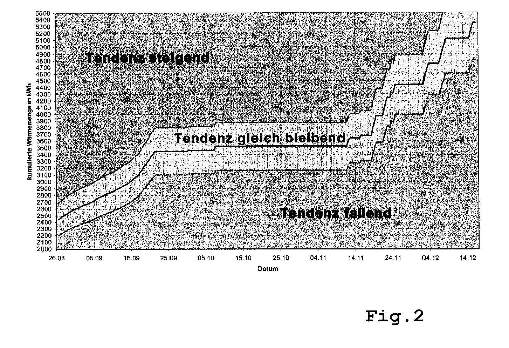

Figur 2            die Darstellung eines akkumulierten Verbrauchswerts mit einem Toleranzband von $\pm$ 10%;

Figuren 3a und 3b      eine beispielhafte Darstellung der Auswertung einer Verbrauchsdatenerfassung als Anzeige auf einem Anzeigemittel.

**Patentansprüche**

1. Rechnergestütztes Verfahren zum Erfassen und Auswerten von Verbrauchsdaten in Form von Wärme-, Strom-, Gas- und/oder Wasserverbrauchsdaten bei der Bewirtschaftung von Liegenschaften, wobei mittels Verbrauchssensoren an jeweiligen Messstellen der Liegenschaft Temperaturen und/oder Durchflussmengen und oder elektrische Ströme gemessen und hieraus Verbrauchsdaten gebildet werden, wobei die Verbrauchsdaten quasikontinuierlich, insbesondere täglich oder noch öfter, ermittelt werden und unmittelbar an eine zentrale Auswertestelle gesandt oder zwischengespeichert und in vorbestimmten oder vorbestimmbaren Zeitintervallen an die zentrale Auswertestelle gesandt werden, **dadurch gekennzeichnet, dass** die quasikontinuierlich gemessenen Temperaturwerte und/ oder Durchflussmengen und die ermittelten Verbrauchsdaten der Datennahme folgend fortlaufend akkumuliert werden, so dass zu jeder Datennahme ein akkumulierter Verbrauchswert vorliegt, und dass sämtliche Verbrauchsdaten oder jeder akkumulierte Verbrauchswert während eines vorbestimmten Zeitraums, insbesondere während einer Bewirtschaftungsperiode, gespeichert wird, und dass zu einem beliebigen Zeitpunkt während eines vorbestimmten Zeitraums der akkumulierte Verbrauchswert zu diesem Zeitpunkt mit demjenigen eines vorangegangenen Zeitraums, insbesondere der vorangegangenen Bewirtschaftungsperiode, verglichen wird.

2. Verfahren nach Anspruch 1, **dadurch gekennzeichnet, dass** der Vergleich rechnergestützt **dadurch** erfolgt, dass geprüft wird, ob der akkumulierte Verbrauchswert zu einem Zeitpunkt innerhalb einer Bandbreite des akkumulierten Verbrauchswerts zum entsprechenden Zeitpunkt eines vorangegangenen Zeitraums liegt.

3. Verfahren nach Anspruch 2, **dadurch gekennzeichnet, dass** die Bandbreite eine prozentuale Bandbreite von insbesondere +/- 10 % des betreffenden akkumulierten Verbrauchswerts des vorangegangenen Zeitraums ist.

4. Verfahren nach Anspruch 1, 2 oder 3, **dadurch gekennzeichnet, dass** entsprechend der quasikontinuierlichen Ermittlung der Verbrauchsdaten die Außentemperatur der Liegenschaft erfasst und gespeichert wird.

5. Verfahren nach Anspruch 4, **dadurch gekennzeichnet, dass** rechnergestützt die.Außentemperatur zu jeder quasikontinuierlichen Ermittlung der Verbrauchsdaten zyklisch erfasst wird und hieraus ein Temperaturwert gebildet wird, der zu der betreffenden Verbrauchsdatennahme gespeichert wird.

6. Verfahren nach Anspruch 4 oder 5, **dadurch gekennzeichnet, dass** zu jeder quasikontinuierlichen Ermittlung der Verbrauchsdaten und zu jeder Außentemperatur eine Gradtagzahl errechnet wird.

7. Verfahren nach Anspruch 6, **dadurch gekennzeichnet, dass** die Gradtagzahl nach folgender Formel errechnet wird,

$$G_{T^0} = \sum_{n=1}^{z} (T^0 - t_{a,z})$$

wobei z die Anzahl der Verbrauchsdatennahmen bezeichnet und $T^0$ einen vorbestimmten Wert, z.B. 15°C.

8. Verfahren nach Anspruch 6 oder 7, **dadurch gekennzeichnet, dass** rechnergestützt der jeweilige aktuelle akkumulierte Verbrauchswert mittels der aktuellen Gradtagzahl und der entsprechenden Gradtagzahl aus einem vorangehenden Zeitraum wie folgt berichtigt wird:

$$Q_{aktuell,korr.} = Q_{aktuell} \cdot \frac{G_{T^0,Vorjahr,t\_aktuell}}{G_{T^0,aktuell,t\_aktuell}}$$

9. Verfahren nach einem oder mehreren der vorstehenden Ansprüche, **dadurch gekennzeichnet, dass** rechnergestützt eine Verbrauchstendenz für eine Nutzeinheit einer Liegenschaft bestimmt wird, indem aus akkumulierten Verbrauchswerten der jeweiligen Nutzeinheit und aus in einem Speicher der zentralen Auswertestelle hinterlegten Daten zu den Flächen der einzelnen Nutzeinheiten einer Liegenschaft ein flächenspezifischer Verbrauch für die Nutzeinheit und für die gesamte Liegenschaft ermittelt wird, die miteinander verglichen werden, insbesondere durch Bestimmung des folgenden Verhältnisses

$$F_{Wärme,i} = \frac{\dfrac{Q_{NE,i}}{A_{NE,i}}}{\dfrac{\sum\limits_{1}^{n} Q_{NE,n}}{\sum\limits_{1}^{n} A_{NE,n}}}$$

10. Verfahren nach Anspruch 9, **dadurch gekennzeichnet, dass** für die Durchführung des Vergleichs geprüft wird, ob das Verhältnis des flächenspezifischen Verbrauchs der Nutzeinheit und des flächenspezifischen Verbrauchs der gesamten Liegenschaft innerhalb von vorbestimmten Intervallen liegen.

11. Verfahren nach einem oder mehreren der vorstehenden Ansprüche, **dadurch gekennzeichnet, dass** rechnergestützt eine Verbrauchstendenz für eine Nutzeinheit einer Liegenschaft bestimmt wird, indem aus akkumulierten Verbrauchswerten der jeweiligen Nutzeinheit und aus in einem Speicher der zentralen Auswertestelle hinterlegten Daten zu der den einzelnen Nutzeinheiten einer Liegenschaft zugeordneten Personenzahl ein personenzahlspezifischer Verbrauch für die Nutzeinheit und für die gesamte Liegenschaft ermittelt wird, die miteinander verglichen werden, insbesondere durch Bestimmung des folgenden Verhältnisses

$$F_{Wasser,i} = \frac{\dfrac{V_{NE,i}}{P_{NE,i}}}{\dfrac{\sum\limits_{1}^{n} V_{NE,n}}{\sum\limits_{1}^{n} P_{NE,n}}}$$

12. Rechnergestütztes Verbrauchsdatenerfassungs- und Auswertungssystem zur Durchführung eines Verfahrens nach einem oder mehreren der vorstehenden Ansprüche, mit Verbrauchssensoren an jeweiligen Messstellen einer Liegenschaft, mittels derer Temperaturen und/oder Durchflussmengen und oder elektrische Ströme gemessen und hieraus Verbrauchsdaten quasikontinuierlich, insbesondere täglich, ermittelt werden, mit einem ersten Rechner in oder bei der Liegenschaft, der mit den Verbrauchssensoren kommuniziert und die Verbrauchsdaten in einem ersten Speichermittel in oder bei der Liegenschaft speichert, wobei der erste Rechner zur Bildung eines akkumulierten Verbrauchswerts aus den Verbrauchsdaten für jede Datennahme und zur Speicherung dieser jeweiligen akkumulierten Verbrauchswerte in dem ersten Speichermittel ausgebildet ist.

13. Rechnergestütztes Verbrauchsdatenerfassungs- und Auswertungssystem zur Durchführung eines Verfahrens nach einem oder mehreren der Ansprüche 1-11, mit Verbrauchssensoren an jeweiligen Messstellen einer Liegenschaft, mittels derer Verbrauchsdaten quasikontinuierlich, insbesondere täglich, ermittelt werden, mit einem ersten Rechner in oder bei der Liegenschaft, der mit den Verbrauchssensoren kommuniziert und die Verbrauchsdaten entweder unmittelbar an eine zentrale Auswertestelle sendet oder in einem ersten Speichermittel in oder bei der Liegenschaft zwischenspeichert und in vorbestimmten oder vorbestimmbaren Zeitintervallen an die zentrale Auswertestelle sendet, und mit einem in der zentralen Auswertestelle vorgesehenen zweiten Rechner und einem zweiten Speichermittel, wobei der erste und/oder der zweite Rechner zur Bildung eines akkumulierten Verbrauchswerts aus den Verbrauchsdaten für jede Datennahme und zur Speicherung dieser jeweiligen akkumulierten Verbrauchswerte in dem ersten oder zweiten Speichermittel ausgebildet ist.

14. Verbrauchsdatenerfassungs- und Auswertungssystem nach Anspruch 12 oder 13, **dadurch gekennzeichnet, dass** der erste und/oder der zweite Rechner ein Vergleichsmittel umfasst, mittels dessen geprüft wird, ob der akkumulierte Verbrauchswert zu einem Zeitpunkt innerhalb einer Bandbreite des akkumulierten Verbrauchswerts zum entsprechenden Zeitpunkt eines vorangegangenen Zeitraums liegt.

**15.** Verbrauchsdatenerfassungs- und Auswertungssystem nach Anspruch 12, 13 oder 14, **dadurch gekennzeichnet, dass** ein Temperatursensor vorgesehen ist, mittels dessen die Außentemperatur zu jeder quasikontinuierlichen Ermittlung der Verbrauchsdaten erfasst wird, und dass der erste Rechner zu der betreffenden Verbrauchsdatennahme einen Außentemperaturwert speichert und/oder an den zweiten Rechner zusammen mit den Verbrauchsdaten sendet.

**16.** Verbrauchsdatenerfassungs- und Auswertungssystem nach Anspruch 15, **dadurch gekennzeichnet, dass** der erste oder der zweite Rechner zur Errechnung einer Gradtagzahl zu jeder quasikontinuierlichen Ermittlung der Verbrauchsdaten und zu jeder Außentemperatur ausgebildet ist.

**17.** Verbrauchsdatenerfassungs- und Auswertungssystem nach Anspruch 15 oder 16, **dadurch gekennzeichnet, dass** der erste oder der zweite Rechner zur Ermittlung eines jeweiligen aktuellen akkumulierten Verbrauchswerts mittels der aktuellen Gradtagzahl ausgebildet ist.

**18.** Verbrauchsdatenerfassungs- und Auswertungssystem nach einem der Ansprüche 12-17, **gekennzeichnet durch** ein dem ersten oder zweiten Rechner zugeordnetes Anzeigemittel, welches gesteuert **durch** den ersten oder zweiten Rechner ein Ergebnis der Auswertung der Verbrauchsdaten anzeigt.

**19.** Verbrauchsdatenerfassungs- und Auswertungssystem nach Anspruch 18, **dadurch gekennzeichnet, dass** der erste oder zweite Rechner und das Anzeigemittel derart ausgebildet sind, dass unterschiedliche optische Darstellungen, insbesondere unterschiedliche Farben, Unterlegungen, graphische Elemente, zur Anzeige unterschiedlicher Kategorien der Auswertung verwendbar sind.

Fig.1

Fig.2

## Ansicht Erdgeschoss

| | | | | | |
|---|---|---|---|---|---|
| Verbrauchstendenz Vorjahr | ↘ | -12,0% | Verbrauchstendenz Vorjahr | | -0,9% |
| Verbrauchstendenz Durchschnitt | | -10,8% | Verbrauchstendenz Durchschnitt | | +0,8% |
| Kostentendenz Vorjahr | ↘ | -5,8% | Kostentendenz Vorjahr | | -0,2% |
| Kostendifferenz Vorjahr | ↘ | -49 € | Kostendifferenz Vorjahr | | -7 € |
| Kostentendenz Faktor | | - 3,9% | Kostentendenz Faktor | | + 0,3% |
| Kostendifferenz Faktor | | - 29€ | Kostendifferenz Faktor | | + 9€ |
| Meldungen: | | keine | Meldungen: | | keine |

| Nutzeinheit 01 | Nutzeinheit 02 |
|---|---|

| | | | | | |
|---|---|---|---|---|---|
| Verbrauchstendenz Vorjahr | ↗ | +22,0% | Verbrauchstendenz Vorjahr | | +2,7% |
| Verbrauchstendenz Durchschnitt | ↗ | +28,8% | Verbrauchstendenz Durchschnitt | | +3,8% |
| Kostentendenz Vorjahr | ↗ | +25,8% | Kostentendenz Vorjahr | | +4,8% |
| Kostendifferenz Vorjahr | ↗ | +143 € | Kostendifferenz Vorjahr | | +39 € |
| Kostentendenz Faktor | ↗ | +32,3% | Kostentendenz Faktor | | + 5,9% |
| Kostendifferenz Faktor | ↗ | +187€ | Kostendifferenz Faktor | | +51€ |
| Meldungen: keine Korrelation zwischen Heizung und Warmwasser | | | Meldungen: | | keine |

| Nutzeinheit 03 | Nutzeinheit 04 |
|---|---|

mögliche Darstellungsform in einer Gesamtübersicht am Beispiel des Wärmeverbrauchs (fiktives Beispiel)

## Fig 3a

**Ansicht Süd-Ost**

| 2.OG | Verbrauchstendenz Vorjahr | +2,7% | Verbrauchstendenz Vorjahr | +2,7% |
| | Verbrauchstendenz Durchschnitt | +3,8% | Verbrauchstendenz Durchschnitt | +3,8% |
| | Kostentendenz Vorjahr | +4,8% | Kostentendenz Vorjahr | +4,8% |
| | Kostendifferenz Vorjahr | +39 € | Kostendifferenz Vorjahr | +39 € |
| | Kostentendenz Faktor | + 5,9% | Kostentendenz Faktor | + 5,9% |
| | Kostendifferenz Faktor | +51€ | Kostendifferenz Faktor | +51€ |
| | Meldungen: | keine | Meldungen: | keine |
| | **Nutzeinheit 09** | | **Nutzeinheit 10** | |

| 1.OG | Verbrauchstendenz Vorjahr | -2,7% | Verbrauchstendenz Vorjahr | +2,7% |
| | Verbrauchstendenz Durchschnitt | -3,8% | Verbrauchstendenz Durchschnitt | +3,8% |
| | Kostentendenz Vorjahr | -4,8% | Kostentendenz Vorjahr | +4,8% |
| | Kostendifferenz Vorjahr | -39 € | Kostendifferenz Vorjahr | +39 € |
| | Kostentendenz Faktor | -5,9% | Kostentendenz Faktor | + 5,9% |
| | Kostendifferenz Faktor | -51€ | Kostendifferenz Faktor | +51€ |
| | Meldungen: | keine | Meldungen: | keine |
| | **Nutzeinheit 05** | | **Nutzeinheit 06** | |

| EG | Verbrauchstendenz Vorjahr | -12,0% | Verbrauchstendenz Vorjahr | -0,9% |
| | Verbrauchstendenz Durchschnitt | -10,8% | Verbrauchstendenz Durchschnitt | +0,8% |
| | Kostentendenz Vorjahr | -5,8% | Kostentendenz Vorjahr | -0,2% |
| | Kostendifferenz Vorjahr | -49 € | Kostendifferenz Vorjahr | -7 € |
| | Kostentendenz Faktor | - 3,9% | Kostentendenz Faktor | + 0,3% |
| | Kostendifferenz Faktor | - 29€ | Kostendifferenz Faktor | + 9€ |
| | Meldungen: | keine | Meldungen: | keine |
| | **Nutzeinheit 01** | | **Nutzeinheit 02** | |

mögliche Darstellungsform in einer Gesamtübersicht am Beispiel des Wärmeverbrauchs (fiktives Beispiel)

# Fig 3b

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0924949 A1